# EUROPEAN PATENT APPLICATION

(11) **EP 3 647 249 A1**
(43) Date of publication of application: **06.05.2020**
(21) Application number: 19202090.7
(22) Date of filing: 08.10.2019
(51) Int. Cl.: B66B 7/12

(54) **IN-SITU SYSTEM FOR HEALTH MONITORING OF ELEVATOR SYSTEM**

(30) Priority: 18.10.2018 US 201816164056
(71) Applicant: Otis Elevator Company, Farmington, Connecticut 06032 (US)
(72) Inventor: YANG, Hong, Farmington, CT Connecticut 06032 (US)
(74) Representative: Dehns

(57) **Abstract**

A health monitoring system (60) for a component of an elevator system (10) includes one or more image sensing devices (62) configured to capture images of the component, an analytic system (64) operably connected to the one or more image sensing devices (62), the analytic system (64) configured to identify one or more abnormal conditions of the component from the captured images, and a warning system (66) configured to produce one or more recommended courses of action based on the identification of the abnormal conditions.

## Description

### BACKGROUND

Exemplary embodiments pertain to the art of elevator systems. More particularly, the present disclosure relates to health monitoring of tension members of elevator systems, for example, of coated belts or ropes.

Elevator systems utilize one or more tension members operably connected to an elevator car and a counterweight in combination with, for example, a machine and traction sheave, to suspend and drive the elevator car along a hoistway. In some systems, the tension member is a belt having one or more tension elements retained in a jacket. The tension elements may be formed from, for example, steel wires or other materials, such as a carbon fiber composite. The tension elements support the load and the jacket holds the tension elements and transfers shear forces to the traction sheave.

Degradation of the tension members due to, for example, excessive coating wear, coating cracks, foreign objective damage, tension elements protrusion, and other abnormalities, reduces performance of the tension member and the elevator system, and may require the tension member to be repaired and/or replaced. Currently, evaluation of the jacket is performed by manual inspection performed by service personnel, which is very labor intensive and may also be inaccurate due to limited access to the tension member in the hoistway.

### BRIEF DESCRIPTION

In one embodiment, a health monitoring system for a component of an elevator system includes one or more image sensing devices configured to capture images of the component, an analytic system operably connected to the one or more image sensing devices, the analytic system configured to identify one or more abnormal conditions of the component from the captured images, and a warning system configured to produce one or more recommended courses of action based on the identification of the abnormal conditions.

Additionally or alternatively, in this or other embodiments the one or more image sensing devices may capture one or more still or video images.

Additionally or alternatively, in this or other embodiments the one or more image sensing devices may bee disposed at one or more sheaves of the elevator system.

Additionally or alternatively, in this or other embodiments the analytic system may utilize one or more of a convolutional neural network or a recurrent neural network in identifying the one or more abnormal conditions.

Additionally or alternatively, in this or other embodiments the component may be a tension member of the elevator system.

Additionally or alternatively, in this or other embodiments the one or more abnormal conditions may include one or more of cracks, pitting, excessive wear, foreign object damage or wire protrusion.

Additionally or alternatively, in this or other embodiments the analytic system may be configured to identify a tension member location of the one or more abnormal conditions.

Additionally or alternatively, in this or other embodiments the tension member location may be obtained via communication between the analytic system and an elevator system control system.

Additionally or alternatively, in this or other embodiments the one or more image sensing devices may be connected to the analytic system via a cloud.

In another embodiment, an elevator system may include a hoistway, an elevator car movable along the hoistway, a tension member operably connected to the elevator car to move the elevator car along the hoistway, and a health monitoring system for the tension member. The health monitoring system may include one or more image sensing devices configured to capture images of the tension member, and an analytic system may be operably connected to the one or more image sensing devices. The analytic system may be configured to identify one or more abnormal conditions of the tension member from the captured images, and a warning system may be configured to produce one or more recommended courses of action based on the identification of the abnormal conditions.

Additionally or alternatively, in this or other embodiments the one or more image sensing devices may capture one or more still or video images.

Additionally or alternatively, in this or other embodiments the one or more image sensing devices may be disposed at one or more sheaves of the elevator system.

Additionally or alternatively, in this or other embodiments the one or more abnormal conditions may include one or more of cracks, pitting, excessive wear, foreign object damage, or wire protrusion.

Additionally or alternatively, in this or other embodiments the analytic system may utilize one or more of a convolutional neural network or a recurrent neural network in identifying the one or more abnormal conditions.

Additionally or alternatively, in this or other embodiments the analytic system may be configured to identify a tension member location of the one or more abnormal conditions.

Additionally or alternatively, in this or other embodiments the tension member location may be obtained via communication between the analytic system and an elevator system control system.

In yet another embodiment, a method of health monitoring of a tension member of an elevator system may include capturing one or more images of the tension member, identifying one or more abnormal conditions of the tension member via analysis of the one or more images of the tension member at an analytic system, and recommending one or more courses of action based on the identification of the one or more abnormal conditions at a warning system.

Additionally or alternatively, in this or other embodiments the one or more courses of action may include an onsite visual inspection of the tension member.

Additionally or alternatively, in this or other embodiments the method may include feeding back results of the visual inspection to the analytic system and to the warning system to improve the accuracy thereof.

Additionally or alternatively, in this or other embodiments the analytic system may utilize one or more of a convolutional neural network or a recurrent neural network in identifying the one or more abnormal conditions.

### BRIEF DESCRIPTION OF THE DRAWINGS

The following descriptions should not be considered limiting in any way. With reference to the accompanying drawings, like elements are numbered alike:
FIG. 1 is a schematic illustration of an elevator system;
FIG. 2 is another schematic illustration of an elevator system;
FIG. 3 is a cross-sectional view of an embodiment of an elevator system tension member;
FIG. 4A is a cross-sectional view of an embodiment of a tension element for an elevator tension member;
FIG. 4B is a cross-sectional view of another embodiment of a tension element for an elevator tension member; and
FIG. 5 is a schematic illustration of a method of monitoring tension members of an elevator system.

### DETAILED DESCRIPTION

A detailed description of one or more embodiments of the disclosed apparatus and method are presented herein by way of exemplification and not limitation with reference to the Figures.

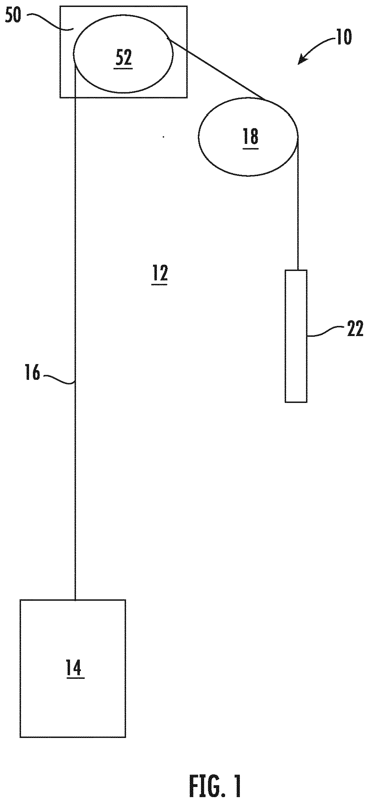

Shown in FIG. 1 is a schematic view of an exemplary traction elevator system 10. Features of the elevator system 10 that are not required for an understanding of the present invention (such as the guide rails, safeties, *etc.*) are not discussed herein. The elevator system 10 includes an elevator car 14 operatively suspended and/or propelled in a hoistway 12 with one or more tension members, for example belts 16. While in the following description, belts 16 are the tension members utilized in the elevator system, one skilled in the art will readily appreciate that the present disclosure may be utilized with other tension members, such as ropes or braided tapes. The one or more belts 16 interact with sheaves 18 and 52 to be routed around various components of the elevator system 10. Sheave 18 is configured as a diverter, deflector or idler sheave and sheave 52 is configured as a traction sheave, driven by a machine 50. Movement of the traction sheave 52 by the machine 50 drives, moves and/or propels (through traction) the one or more belts 16 that are routed around the traction sheave 52. Diverter, deflector or idler sheaves 18 are not driven by a machine 50, but help guide the one or more belts 16 around the various components of the elevator system 10. The one or more belts 16 could also be connected to a counterweight 22, which is used to help balance the elevator system 10 and reduce the difference in belt tension on both sides of the traction sheave during operation. The sheaves 18 and 52 each have a diameter, which may be the same or different from each other.

In some embodiments, the elevator system 10 could use two or more belts 16 for suspending and/or driving the elevator car 14. In addition, the elevator system 10 could have various configurations such that either both sides of the one or more belts 16 engage the sheaves 18, 52 or only one side of the one or more belts 16 engages the sheaves 18, 52. The embodiment of FIG 1 shows a 1:1 roping arrangement in which the one or more belts 16 terminate at the elevator car 14 and counterweight 22, while other embodiments may utilize other roping arrangements.

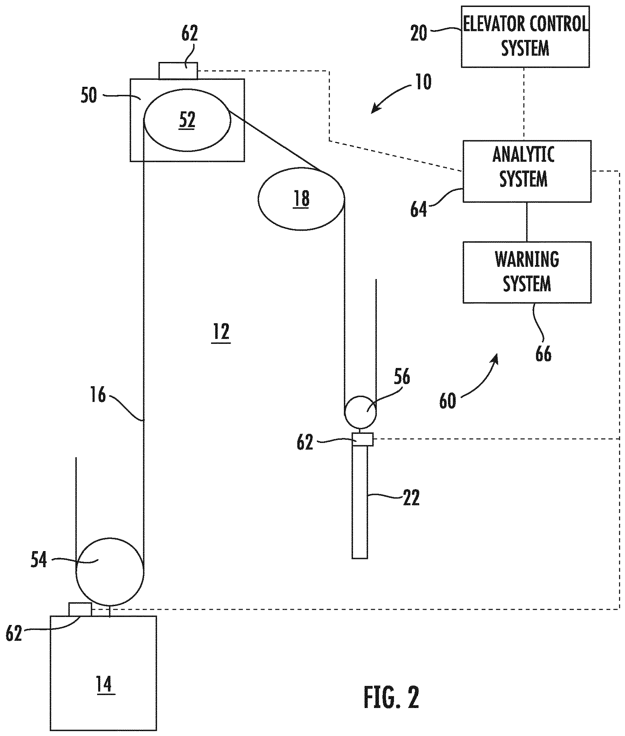

For example, in another embodiment illustrated in FIG. 2, the belts 16 are not terminated at the car 14 and at the counterweight 22, but are routed around a car sheave 54 and a counterweight sheave 56 at the elevator car 14 and at the counterweight 22, respectively.

The belts 16 are constructed to meet belt life requirements and have smooth operation, while being sufficiently strong to be capable of meeting strength requirements for suspending and/or driving the elevator car 14 and counterweight 22.

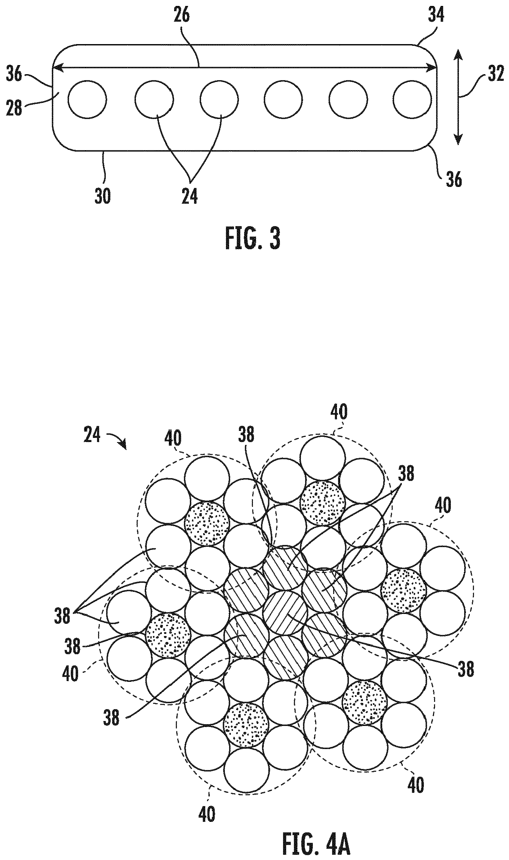

FIG. 3 provides a cross-sectional schematic of an exemplary belt 16 construction or design. The belt 16 includes a plurality of tension elements 24 extending longitudinally along the belt 16 and arranged across a belt width 26. The tension elements 24 are at least partially enclosed in a jacket 28 to restrain movement of the tension elements 24 in the belt 16 with respect to each other and to protect the tension elements 24. The jacket 28 defines a traction side 30 configured to interact with a corresponding surface of the traction sheave 52. A primary function of the jacket 28 is to provide a sufficient coefficient of friction between the belt 16 and the traction sheave 52 to produce a desired amount of traction there between. The jacket 28 should also transmit the traction loads to the tension elements 24. In addition, the jacket 28 should be wear resistant, fatigue resistant and protect the tension elements 24 from impact damage, exposure to environmental factors, such as chemicals, for example.

Exemplary materials for the jacket 28 include the elastomers of thermoplastic and thermosetting polyurethanes, thermoplastic polyester elastomers, ethylene propylene diene elastomer, chloroprene, chlorosulfonyl polyethylene, ethylene vinyl acetate, polyamide, polypropylene, butyl rubber, acrylonitrile butadiene rubber, styrene butadiene rubber, acrylic elastomer, fluoroelastomer, silicone elastomer, polyolefin elastomer, styrene block and diene elastomer, natural rubber, or combinations thereof. Other materials may be used to form the jacket material 28 if they are adequate to meet the required functions of the belt 16.

The belt 16 has a belt width 26 and a belt thickness 32, with an aspect ratio of belt width 26 to belt thickness 32 greater than one. The belt 16 further includes a back side 34 opposite the traction side 30 and belt edges 36 extending between the traction side 30 and the back side 34. While six tension elements 24 are illustrated in the embodiment of FIG. 3, other embodiments may include other numbers of tension elements 24, for example, 4, 10 or 12 tension elements 24. Further, while the tension elements 24 of the embodiment of FIG. 3 are substantially identical, in other embodiments, the tension elements 24 may differ from one another. While a belt 16 with a rectangular cross-section is illustrated in FIG. 3, it is to be appreciated that belts 16 having other cross-sectional shapes are contemplated within the scope of the present disclosure.

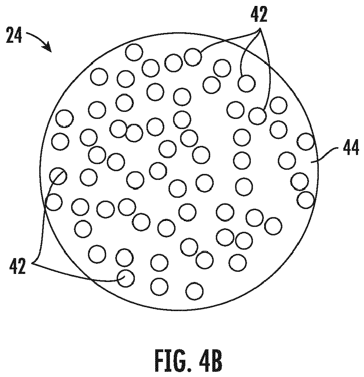

Referring now to FIG. 4A, the tension element 24 may be a plurality of wires 38, for example, steel wires 38, which in some embodiments are formed into one or more strands 40. In other embodiments, such as shown in FIG. 4B, the tension element 24 may include a plurality of fibers 42, such as carbon fiber, glass fiber aramid fiber, or their combination, disposed in a matrix material 44. Materials such as polyurethane, vinylester, or epoxy may be utilized as the matrix material, as well as other thermoset materials and, for example, thermoset polyurethane materials. While a circular cross-sectional tension element geometry is illustrated in the embodiment of FIG 4B, other embodiments may include different tension element cross-sectional geometries, such as rectangular or ellipsoidal. While the cross-sectional geometries of the tension elements 24 in FIG. 3 are shown as identical, in other embodiment the tension elements' cross-sectional geometries may differ from one another. Further, while the present disclosure is described in the context of a belt 16, one skilled in the art will readily appreciate that the disclosure may be readily applied to elevator systems 10 utilizing other types of tension members, for example a coated rope. Further, the present disclosure may be utilized with not only a tension member, but also a compensation member.

Referring again to FIG. 2, the elevator system 10 is configured to include a health monitoring system 60. The health monitoring system 60 includes a one or more image sensing devices 62, for example, video camera devices at locations in the hoistway 12 where the image sensing devices 62 are positioned to observe a condition of the jacket 28. Such locations may include at the traction sheave 52, the car sheave 54 and the counterweight sheave 56. The image sensing devices 62 are operatively connected to an analytic system 64, in some embodiments through a wired-connection or a cloud-based transmission. While in the present disclosure the health monitoring system 60 is utilized to monitor condition of the belt 16, one skilled in the art that the health monitoring system 60 may be further utilized to detect abnormalities in other components of the elevator system 10, such as the sheaves or other components.

The analytic system 64 is configured to receive video or still images from the image sensing devices 62 of the jacket 28. The analytic system 64 performs image analysis of the images to determine if any abnormal conditions of the jacket 28, such as transverse or longitudinal cracking, extreme wear conditions, foreign object damage or the like are present in the images. In some embodiments, the analytic system 64 utilizes, for example, convolutional neural networks (CNN) or recurrent neural networks (RNN) to build a model of identifiable conditions and to evaluate the received images.

In some embodiments, the analytic system 64 not only identifies abnormal conditions, but identifies locations on the belt 16 of the abnormal conditions. This may be achieved via analyzing car 14 position data at the time the image was captured and correlating the car 14 position with a location on the belt 16. The car position data is acquired by, for example, communication between the analytic system 64 and an elevator system controller 20.

With abnormal conditions identified, a warning system 66 operably connected to the analytic system 64 may communicate a report of abnormal jacket 28 conditions identified and/or a recommended course of action to service personnel, who may be located remotely from the elevator system 10. Such a recommended course of action may be dependent on quantity and/or severity of the abnormal conditions identified and may include a recommended date for onsite inspection of the belt 16 by the service personnel to confirm the indicated jacket conditions.

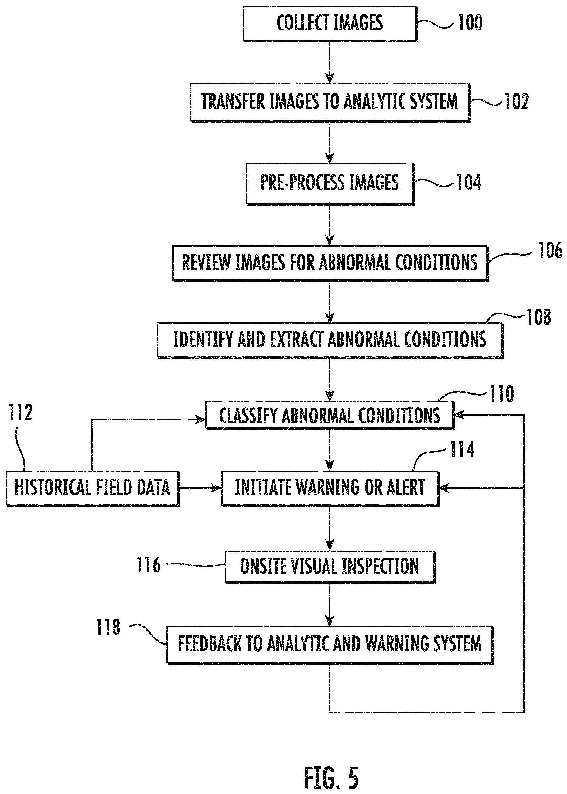

Referring now to FIG. 5, a schematic illustration of a method of monitoring a belt 16 condition is shown. At block 100, video or still images are collected at selected intervals via the image sensing devices 62. At block 102, the images are transferred to the analytic system 64 via, for example, the cloud. At block 104, the collected images may be cropped, filtered, or otherwise pre-processed prior to evaluation. The images are reviewed at block 106 for one or more abnormal conditions of the jacket 28, and the images including the abnormal conditions are identified and extracted at block 108. In some embodiments, the abnormal conditions are tagged with a location identifier to facilitate locating the conditions on the belt 16 itself. At block 110, the abnormal conditions may be classified by type, such as cracking, pitting, foreign object damage, wire protrusion or the like, as well as severity. The classification may use historical field data introduced to the warning system 66 via block 112. At block 114, the warning system 66 utilizes the classified conditions to initiate a warning, alert, or other response, which may include a recommended course of action. The recommended course of action may include an onsite visual inspection of the belt 16 at block 116. In response to the visual inspection, feedback is provided to the analytic system 64 at block 110 to refine the classification model; and to the warning system 66 at block 118 to refine the determinations made by the warning system 66.

The system and method disclosed herein allow for continuous monitoring of the condition of the elevator belt 16, with a considerable savings in time and labor relative to a system which relies solely on manual visual inspection of the belt 16.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A health monitoring system for a component of an elevator system, comprising:
one or more image sensing devices configured to capture images of the component;
an analytic system operably connected to the one or more image sensing devices, the analytic system configured to identify one or more abnormal conditions of the component from the captured images; and
a warning system configured to produce one or more recommended courses of action based on the identification of the abnormal conditions.

2. The health monitoring system of claim 1, wherein the one or more image sensing devices capture one or more still or video images.

3. The health monitoring system of any of the preceding claims, wherein the one or more image sensing devices are disposed at one or more sheaves of the elevator system.

4. The health monitoring system of any of the preceding claims, wherein the analytic system utilizes one or more of a convolutional neural network or a recurrent neural network in identifying the one or more abnormal conditions.

5. The health monitoring system of any of the preceding claims, wherein the component is a tension member of the elevator system.

6. The health monitoring system of claim 5, wherein the one or more abnormal conditions include one or more of cracks, pitting, excessive wear, foreign object damage or wire protrusion.

7. The health monitoring system of claim 5 or claim 6, wherein the analytic system is configured to identify a tension member location of the one or more abnormal conditions.

8. The health monitoring system of claim 7, wherein the tension member location is obtained via communication between the analytic system and an elevator system control system.

9. The health monitoring system of any of the preceding claims, wherein the one or more image sensing devices is connected to the analytic system via a cloud.

10. An elevator system, comprising:
a hoistway;
an elevator car movable along the hoistway;
a tension member operably connected to the elevator car to move the elevator car along the hoistway; and
a health monitoring system according to any of claims 1 to 9, wherein the component to be monitored is the tension member, wherein
the one or more image sensing devices are configured to capture images of the tension member;
the analytic system operably is connected to the one or more image sensing devices, the analytic system configured to identify one or more abnormal conditions of the tension member from the captured images; and
the warning system is configured to produce one or more recommended courses of action based on the identification of the abnormal conditions.

11. A method of health monitoring of a tension member of an elevator system, comprising:
capturing one or more images of the tension member;
identifying one or more abnormal conditions of the tension member via analysis of the one or more images of the tension member at an analytic system; and
recommending one or more courses of action based on the identification of the one or more abnormal conditions at a warning system.

12. The method of claim 11, wherein the one or more courses of action include an onsite visual inspection of the tension member.

13. The method of claim 12, further comprising feeding back results of the visual inspection to the analytic system and to the warning system to improve the accuracy thereof.

14. The method of any of claims 11 to 13, wherein the analytic system utilizes one or more of a convolutional neural network or a recurrent neural network in identifying the one or more abnormal conditions.
